# EUROPEAN PATENT APPLICATION

(11) **EP 1 688 945 A1**
(43) Date of publication of application: **09.08.2006**
(21) Application number: 03819068.2
(22) Date of filing: 28.11.2003
(51) Int. Cl.: G11B 20/10, G11B 11/105, G11B 7/30

(54) **OPTICAL DISC AND RECORDING/REPRODUCTION DEVICE**

(71) Applicant: FUJITSU LIMITED, Kawasaki-shi, Kanagawa 211-8588 (JP)
(72) Inventor: HOSOKAWA, Tetsuo, c/o YAMAGATA FUJITSU LIMITED, Higashine-shi, Yamagata 999-3701 (JP)
(74) Representative: Seeger, Wolfgang
(86) International application number: PCT/JP2003/015248
(87) International publication number: WO 2005/052938

(57) **Abstract**

An optical disc has a recording structure consisting of an ROM section and an RAM section which are preferable for multiplexing recording/reproduction of music information and the like On the optical disc, the ROM section where information has been recorded by a phase pit using the light reflectance and the RAM section on/from which recording and reproduction can be preformed are arranged in layers and information recorded in the ROM section and the information recorded in the RAM section are synchronously reproduced. The RAM section is divided into a plurality of information recording areas from which information can be reproduced synchronously with the ROM section. While reproducing music information from the ROM section, music information such as music by separate musical instruments is multiplexedly recorded on the RAM section and multiplexedly reproduced when necessary.

## Description

### Technical Field

The present invention relates to an optical disc having a ROM section in which information is recorded by phase pits utilizing light reflectance and a RAM section on/from which recording and reproduction can be magneto-optically performed and to a recording/reproduction device, and particularly relates to an optical disc in which a RAM section and a ROM section in which information is multiplexedly recorded can be synchronously reproduced and to a recording/reproduction device.

### Background Art

Conventionally, CDs (Compact Discs) are publicly and widely disseminated as media used by common users for listening to music. Moreover, MD (Mini Disc) systems and the like using magneto-optical media are disseminated as devices for recording and reproducing digital audio data. Note that music stored in CDs can be recorded and reproduced in MD systems.

As described above, in conventional ways of listening to music, a common way of enjoying music is to buy and listen to media such as CDs in which music information is recorded in advance as ROMs or to record favorite music in MDs and the like and listen to that.

Another way of enjoying music is to play a musical instrument on one's own. In order to record and reproduce a performance of a musical instrument, an external microphone is attached to a device which can perform recording of a MD or the like, and the performance is recorded in live and reproduced. In this case, the performance of one's own is solely recorded. However, most music is composed of different parts played by various musical instruments like an orchestra and a band. Therefore, when an individual player is to individually play a part of an orchestra or a band, for example, the player can play a musical instrument while listening to a CD. However, a device for recording has to be separately prepared for recording the performance, and the device for recording has to be operated at the same time as the performance, which has been cumbersome. Moreover, it has been extremely difficult to record high-quality music, for example, in the method in which, while reproducing a CD, a musical instrument is played in concert with it, and the performance is recorded by an external input microphone or the like, since adjustment of the volume balance between the CD reproduction and the performance has been extremely difficult.

Multiplex recording is performed to improve the above described problem in music recording. In multiplex recording, different music is recorded in each track of an optical disc having a plurality of recording tracks. More specifically, music is recorded in advance in a first track, and, while reproducing and listening to the sounds thereof, sounds are lapped over on them and recorded in a different track. For example, when the piano is recorded first, and the guitar is subsequently recorded while listening to the sounds of the piano, the piano and the guitar can be reproduced at the same time. In order to perform recording while performing reproduction with a plurality of tracks, or to reproduce music of a plurality of tracks at the same time in the above described manner, a high-speed high-capacity storage device is required, and a hard disk is mainly used.

However, multiplex recording systems utilizing hard disks require high-level editing and complicated operations since the systems are aimed for production of music. Consequently, the multiplex recording systems using hard disks are not commonly disseminated although they are utilized in limited situations. Moreover, since magnetic discs do not have ROM sections like phase pits of optical discs, in order to record music in advance, the music has to be magnetically recorded in each disc, which causes a problem of increased production cost.

Multiplex recording systems using MDs (Mini Disks) as media which are simple and can be easily managed compared with hard disks are also realized. The cost of media is reduced by using MDs; however, the systems are same as the devices which are using hard disks in terms that users have to record music sequentially in a plurality of tracks. Therefore, in order to record music information in advance until the point of shipment, magneto-optical recording has to be performed on each disk as well as the case of hard disks, and the cost of the media is increased. In addition, there is also a problem that the recording capacity is reduced in an amount corresponding to division into a plurality of tracks. Therefore, the conventional multiplex recording systems using MDs for recording are not commonly disseminated although they are used by some specialists. As described above, except for some specialists, conventional ways of enjoying music are limited to three ways, i.e. , listening to music, individually playing a musical instrument, and recording and reproducing an individual performance.

Meanwhile, optical discs of a concurrent ROM/RAM method in which ROM sections and RAM sections are provided in one medium have possibilities of realizing multiplex recording and concurrent reproduction functions, which have been limited to some specialists, at low cost. For example, a method in which, in synchronization with music or image information which is recorded in advance in a ROM section using phase pits, different music or image information is recorded at the same position in a RAM section has been proposed (Patent Document 1). Moreover, methods in which music information which is divided and recorded by use of a partial ROM method is synchronously reproduced in terms of time have also been proposed (Patent Documents 2, 3). Every one of the propositions is a method relating to synchronization of music information in terms of time, wherein adjustment of output ratio or waveforms upon mixing is left unknown.
(Patent Document 1: Japanese Patent Application Laid-Open (*kokai*) No. H07-065375)
(Patent Document 2: Japanese Patent Application Laid-Open (*kokai*) No. H05-151758)
(Patent Document 3: Japanese Patent Application Laid-Open (*kokai*) No. H11-077294)

When music information pieces are to be multiplexedly recorded or reproduced, although synchronization of the music information pieces in terms of time is also required, adjustment of the output ratio or waveforms of the music information pieces upon mixing is also important at the same time. It is extremely difficult to listen to music with satisfactory quality with mixing without adjustment of the output ratio or waveforms. Generally, it is difficult to predict and determine the optimum adjustment amount of the output ratio or waveforms of music information pieces upon recording, and it is preferred to be arbitrarily set upon reproduction after recording. Moreover, since the settings are the conditions which are unique to respective music contents, they are preferred to be recorded in respective information media. Thereat, the inventor of the present application has proposed a mixing method of synchronous recording/reproduction of an optical disc having ROM sections and RAM sections. This mixing method is on the presupposition that one piece of RAM information is subjected to mixing recording/reproduction with respect to a single piece of ROM information.

However, merely one time of recording is often unsatisfactory in actual mixing recording. For example, normally, one time of recording is not always satisfactory in a case in which a music performance is to be recorded in synchronization with a ROM. Performances are sometimes compared with each other through several times of performances. Moreover, performing multi-track recording using a plurality of musical instruments is also conceivable. Moreover, if a plurality of performances or images is similarly recorded also in a ROM section, options are increased.

### Disclosure of Invention

An object of the present invention is to provide an optical disc having a recording structure including a ROM section and a RAM section which are suitable for multiplex recording and reproduction of music information, etc., and to provide a recording/reproduction device.

In the present invention, an optical disc in which a ROM section in which information is recorded by a phase pit utilizing light reflectance and a RAM section on/from which recording and reproduction can be performed are disposed in layers, and the information recorded in the ROM section and information recorded in the RAM section can be synchronously reproduced; is characterized in that the RAM section is divided into a plurality of information recording areas which can be synchronously reproduced with the ROM section.

According to such an optical disc of the present invention, music information such as that of a drum, bass, guitar, chorus, and a vocal other than the performance part of a musical instrument is recorded in advance as ROM information in the ROM section, and, while listening to the music information recorded in the ROM section, the musical instrument is played in accordance with that. The performance of the musical instrument is synchronously recorded in the RAM section of the same optical disc at the same time as the reproduction of the ROM music information. In this case, for example, the musical instrument can be changed or the performance of the same musical instrument can be repeated so as to perform synchronous recording on different RAM sections. After synchronous recording is finished, multiplex reproduction in which music information pieces multiplexedly recorded in the ROM section and one or more of the RAM sections are synchronously reproduced and synthesized to be output can be readily performed. Consequently, a multiplex recording function which has been limited to some specialists can be readily realized at low cost.

In another mode of the present invention, an optical disc in which a ROM section in which information is recorded by a phase pit utilizing light reflectance and a RAM section on/from which recording and reproduction can be performed are disposed in layers, and the information recorded in the ROM section and information recorded in the RAM section can be synchronously reproduced; is characterized in that, inversely, the ROM section is divided into a plurality of information recording areas which can be synchronously reproduced with the RAM section.

When the RAM section is divided into a plurality of information recording areas which can be synchronously reproduced with the ROM section, the information recording areas of the optical disc have a structure composed of units of at least one ROM section having an information amount of a certain time length and at least two RAM sections having an information amount equal to the time length of the ROM section.

When the ROM section is divided into a plurality of information recording areas which can be synchronously reproduced with the RAM section, the information recording areas have a structure composed of units of at least two ROM sections having an information amount of a certain time length and at least one RAM section having an information amount equal to the time length of the ROM section.

The RAM section and the ROM section in the optical disc are overlapped with each other. The RAM section is a magneto-optical recording film. Furthermore, a region for recording mixing information used for synthesizing the information recorded in the ROM section and the RAM section is provided on the medium. The mixing information is recorded in a RAM section other than the information recording areas.

In another mode of the present invention, a disc-like optical disc in which a ROM section in which information is recorded by a phase pit utilizing reflectance and a RAM section on/from which recording and reproduction can be performed by light are disposed at different positions on a medium; is characterized in that the RAM section is divided into a plurality of information recording areas which can be synchronously reproduced with the ROM section.

Herein, in the information recording areas, the total of a certain time length of each of the divided RAM sections is approximately equal to a time length of the ROM section. Moreover, mixing information of the divided RAM sections is recorded on the medium.

In another mode of the present invention, a disc-like multiplex optical disc in which a ROM section in which information is recorded by a phase pit utilizing reflectance and a RAM section on/from which recording and reproduction can be performed by light are disposed at different positions on a medium; is characterized in that, inversely, the ROM section is divided into a plurality of information recording areas which can be synchronously reproduced with the RAM section.

Herein, in the information recording areas, the total of a certain time length of each of the divided ROM sections is approximately equal to a time length of the RAM section. Moreover, mixing information of the divided ROM sections is recorded on the medium. The ROM section and the RAM section are repeatedly disposed in the circumferential direction. The RAM section is formed of a phase change recording film. The mixing information is recorded in a RAM section other than the information recording areas.

In the optical disc of the present invention, music information is recorded in the ROM section, and other music information synchronized with the music information of the ROM section is recorded in the RAM section.

The present invention provides a recording/reproduction device for recording and reproducing information of an optical disc in which a ROM section in which an information piece is recorded by a phase pit utilizing light reflectance and a RAM section on/from which recording and reproduction can be performed are disposed in layers, and the RAM section is divided into a plurality of information recording areas which can be synchronously reproduced with the ROM section.

The recording/reproduction device is characterized by having an information detecting unit for detecting the ROM information piece of the ROM section and RAM information pieces of the RAM section, and a reproducing unit for synchronously synthesizing and reproducing the ROM information piece and one or more of the RAM information pieces which have been detected by the information detecting unit.

In another mode of the device of the present invention provided is a recording/reproduction device for recording and reproducing information of an optical disc in which a ROM section in which information pieces are recorded by phase pits utilizing light reflectance and a RAM section on/from which recording and reproduction can be performed are disposed in layers, and the ROM section is divided into a plurality of information recording areas which can be synchronously reproduced with the RAM section. The recording/reproduction device is characterized by having an information detecting unit for detecting the ROM information pieces of the ROM section and a RAM information piece of the RAM section, and a reproducing unit for synchronously synthesizing and reproducing the RAM information piece and one or more of the ROM information pieces which have been detected by the information detecting unit.

In another mode of the device of the present invention, a recording/reproduction device of an optical disc in which a ROM section in which an information piece is recorded by a phase pit utilizing reflectance and a RAM section on/from which recording and reproduction can be performed are disposed at different positions on a medium, and the RAM section is divided into a plurality of information recording areas which can be synchronously reproduced with the ROM section; the recording/reproduction device is characterized by having an information detecting unit for detecting the ROM information piece of the ROM section and RAM information pieces of the RAM section, and a reproducing unit for synchronously synthesizing and reproducing the ROM information piece and one or more of the RAM information pieces which have been detected by the information detecting unit.

In further another mode of the device of the present invention, a recording/reproduction device of an optical disc in which a ROM section in which information pieces are recorded by phase pits utilizing reflectance and a RAM section on/from which recording and reproduction can be performed are disposed at different positions on a medium, and the ROM section is divided into a plurality of information recording areas which can be synchronously reproduced with the RAM section; the recording/reproduction device is characterized by having an information detecting unit for detecting ROM information pieces of the ROM section and a RAM information piece of the RAM section, and a reproducing unit for synchronously synthesizing and reproducing the RAM information piece and one or more of the ROM information pieces which have been detected by the information detecting unit.

### Brief Description of Drawings

FIG. 1 is an explanatory drawing of a multiplex recording/reproduction system using an optical disc and a recording/reproduction device of the present invention;
FIG. 2 is an explanatory drawing of the recording/reproduction device of FIG. 1;
FIGs. 3A to 3C are explanatory drawings of the structure of the optical disc according to the present invention;
FIG. 4 is an explanatory drawing of a state of multiplex recording of ROM signals and RAM signals in the optical disc of the present invention;
FIG. 5 is an explanatory drawing of recording regions in the optical disc of the present invention;
FIG. 6 is an explanatory diagram of a recording structure of the optical disc of the present invention in which a RAM section is divided into three record information areas which can be synchronously reproduced with a ROM section;
FIGs. 7A and 7B are explanatory diagrams of a specific medium format based on FIG. 6;
FIG. 8 is an explanatory drawing of a TOC region for recording mixing information in the optical disc of the present invention;
FIGs. 9A and 9B are explanatory diagrams of a medium format of the TOC region of FIG. 8;
FIGs. 10A and 10B are block diagrams of a recording/reproduction device according to the present invention;
FIG. 11 is an explanatory diagram of a recording structure of the optical disc of the present invention in which a ROM section is divided into three record information areas which can be synchronously reproduced with a RAM section;
FIG. 12 is an explanatory diagram of a recording structure of the optical disc of the present invention in which a RAM section is divided into three record information areas which can be synchronously reproduced with two ROM sections;
FIG. 13 is an explanatory diagram of a recording structure of the optical disc of the present invention in which, with respect to the circumferential direction, a RAM section is divided into three record information areas which can be synchronously reproduced with a ROM section;
FIG. 14 is an explanatory diagram of an optical disc of the present invention in which RAM sections and ROM sections are divided into the inner periphery side and the outer periphery side;
FIG. 15 is an explanatory diagram of an optical disc of the present invention in which RAM sections and ROM sections are divided with respect to the circumferential direction; and
FIGs. 16A to 16C are explanatory diagrams of an optical disc of the present invention in which the multiplex recording structure of ROM sections and RAM sections is duplicated in the thickness direction of the medium.

### Best Mode for Carrying Out the Invention

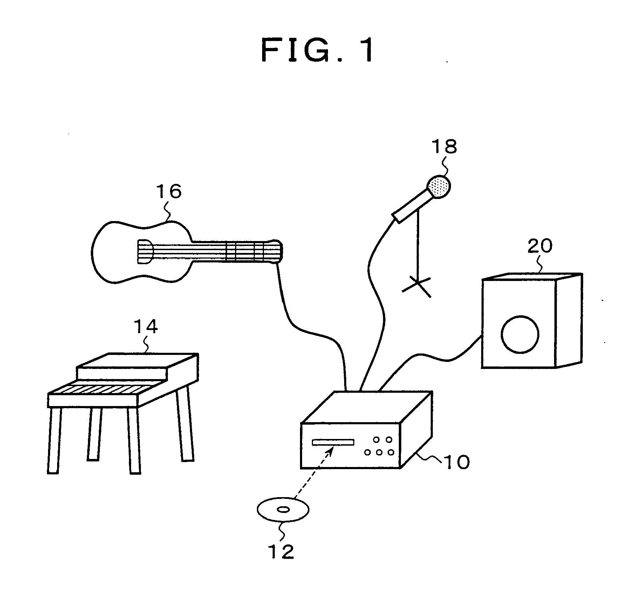

FIG. 1 is an explanatory drawing of a multiplex recording/reproduction system for music using an optical disc and a recording/reproduction device of the present invention.

In FIG. 1, an optical disc 12 serving as a recording medium is used for a recording/reproduction device 10 of the present invention, and recording and reproduction can be performed when the optical disc 12 is inserted from a slot of the recording/reproduction device 10. In the optical disc 12 of the present invention, ROM sections in which information has been recorded in advance by use of phase pits utilizing light reflectance and RAM sections on/from which recording and reproduction can be performed are arranged in layers in the thickness direction of the medium; wherein information recorded in the ROM sections and the information recorded in the RAM sections can be synchronously reproduced. Furthermore, the present invention is characterized in that the RAM section corresponding to one ROM section is divided into a plurality of information storage areas which can be reproduced in synchronization with the ROM section.

In the multiplex recording/reproduction system of FIG. 1, for example, a guitar 16 and a microphone 18 are connected so as to be input to the recording/reproduction device 10, a speaker 20 is connected for performing output from the device, and a piano 14 is disposed in addition to the guitar 16, wherein the sounds of the piano 14 is arranged to be input from the microphone 18. More specifically, the sounds of the guitar 16 are directly converted into electric signals and fed to the recording/reproduction device 10, the sounds from the piano 14 are converted into electric signals through the microphone 18 and input to the recording/reproduction device 10, and both of the signals are converted into digital signals by an AD converter and then recorded on the optical disc 12. In this course, the music information which has been recorded in advance in the ROM section of the optical disc 12 is caused to be output from the speaker 20. The music information of the ROM section output from the speaker 20 may be, for example, a band performance such as a drum, bass, guitar, chorus, and vocal, may be a performance of an orchestra, or may be sounds marking a rhythm of a predetermined interval other than the performance part of a musical instrument. In any case, the music information recorded in the ROM section of the optical disc 12 is reproduced by the speaker 20, and an instrument such as the guitar 16 or the piano 14 is played while listening to that, and the performance is recorded in any of the plurality of information recording areas of the RAM section corresponding to the ROM section.

Upon recording of the music information with respect to the RAM section which is divided into the plurality of information recording areas corresponding to the ROM section of the optical disc 12, the music signals of the guitar 16 and the piano 14 can be separately recorded, or several times of repeated play of the same musical instrument such as the guitar 16 can be separately and synchronously recorded. Certainly, a plurality of musical instruments from which electric signals of the play are directly input to the recording/reproduction device 10 like the guitar 16 may be played at the same time such that the performances can be separately recorded in the information recording areas of the RAM section corresponding to the ROM section. Herein, the output signals from the recording/reproduction device 10 are sent to the speaker 20 and reproduced therefrom; however, the microphone 18 or the like may catch the sounds when they are reproduced through the speaker 20. Therefore, an output device such as headphones can be used in such a case. In reproduction of music information from the optical disc 12, when the RAM section has no recording information, merely the music information which has been recorded in the ROM section in advance is reproduced and output. However, after once the performance information of the guitar 16 or the piano 14 is recorded in the RAM section, the music information of the ROM section and the RAM section can be read out such that the signals thereof can be synthesized, and then, they can be output from the speaker 20. Certainly, the speaker 20 is not limited to an external speaker, and a speaker may be incorporated in the recording/reproduction device 10 per se.

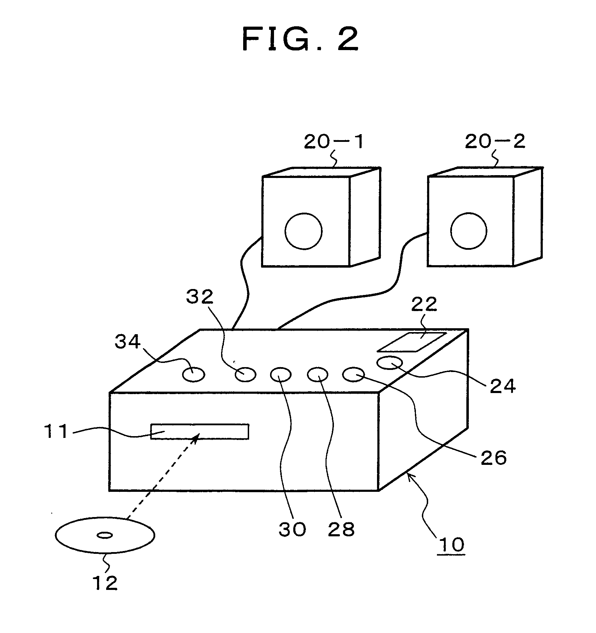

FIG. 2 is an explanatory drawing of the recording/reproduction device of FIG. 1 according to the present invention. In FIG. 2, the recording/reproduction device 10 has, in the front face thereof, a slot 11 for inserting and ejecting the optical disc 12; and recording and reproduction of music information can be performed when the optical disc 12 is inserted from the slot 11. In the recording/reproduction device 10, a music number selection unit 22, a mixing ON/OFF button 24, a volume ratio adjustment button 26, a RAM tone adjustment button 28, a ROM tone adjustment button 30, a determination button 32, and a mixing track selection button 34 are provided as operation units for multiplexrecording and reproduction. Moreover, in this example, two speakers 20-1 and 20-2 are connected to the recording/reproduction device, thereby enabling stereo reproduction of music information.

The operation units of the recording/reproduction device 10 of the present invention in FIG. 2 are utilized in mixing operations after multiplex recording of plural pieces of music information is performed on the optical disc 12 by use of the musical instruments like those shown in FIG. 1. For example, in a state in which the optical disc 12 on which multiplex recording has been performed is loaded in the recording/reproduction device 10, the mixing ON/OFF button 24 is operated so as to set an mixing-ON state, and then, a particular music piece is selected by the music number selection unit 22, thereby activating the mixing state and enabling the volume ratio adjustment button 26, the RAM tone adjustment button 28, and the ROM tone adjustment button 30.

In this state, the ROM section and the RAM section on which multiplex recording has been performed in the optical disc 12 are reproduced such that the music which has undergone mixing is output from the speakers 20-1 and 20-2. Therefore, the user operates the RAM tone adjustment button 28 and the ROM tone adjustment button 30 so as to adjust the conditions to preferable conditions while listening to the reproduced music. When the determination button 32 is pressed after the adjustment is finished, the information of adjusted volume ratio and tone is recorded in a TOC (Table Of Contents) memory in the device, and, when reproduction of the music piece is finished, the information of the setting conditions of the mixing is recorded in a TOC area which is provided in the optical disc 12 in advance. Moreover, any one of the information recording areas of the RAM section, which is divided into a plurality of areas corresponding to the ROM section, can be selected by selecting the mixing track selection button 34 upon reproduction, thereby selecting the recorded music information that is to be subjected to mixing.

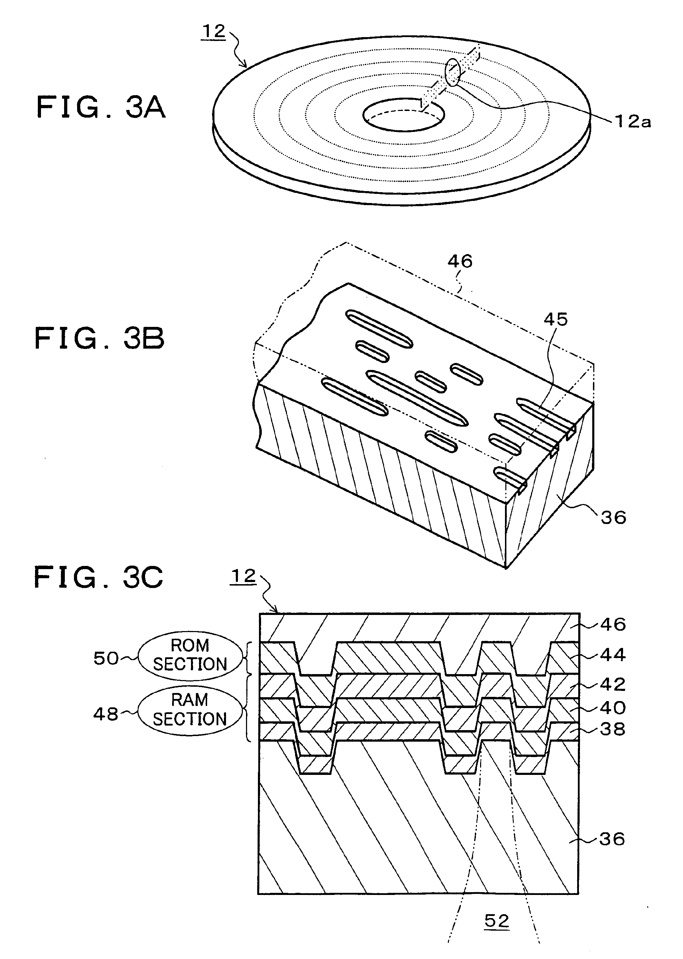

FIGs. 3A to 3C are explanatory drawings of the structure of the optical disc according to the present invention. FIG. 3A is showing the external appearance of the optical disc 12 according to the present invention, wherein recording tracks are formed in the editing or spiral direction on the recording surface of the medium. FIG. 3B focuses on the part of 12a which is a portion of a radial cross section of the optical disc 12. The optical disc 12 has, above a transparent substrate 36, ROM sections in which information is recorded by use of phase pits 45 utilizing light reflectance, and a protective coat 46 is formed on the recording surface of the phase pits 45.

FIG. 3C is an explanatory drawing showing the enlarged medium structure of the part of the phase pits 45, which are formed on the transparent substrate 36 of FIG. 3B, with respect to the radial cross section. In FIG. 3C, in the optical disc 12, the transparent substrate 36 is disposed in the side from which laser light 52 enters, a RAM section 48 and a ROM section 50 are formed in layers subsequent to the transparent substrate 36, and a protective coat 46 is provided thereon. In the detailed structure of the RAM section 48 and the ROM section 50, a dielectric film 38, a magneto-optical recording film 40, and a dielectric film 42 are provided subsequently to the transparent substrate 36 so as to form the RAM section 48; a reflective film 44 is subsequently provided so as to form the ROM section 50; and the protective coat 46 is further provided. The transparent substrate 36 uses, for example, polycarbonate or amorphous polyolefin as a material, and the phase pits 45 like those shown in FIG. 3B constituting the ROM section are formed through shaping on the surface of the transparent substrate 36. The transparent substrate 36 is introduced into a sputtering apparatus, and the films of the RAM section 48 are formed. In this film formation, on the phase pit formed surface of the transparent substrate 36, first, the dielectric film 38 of, for example, SiN is formed; the magneto-optical recording film 40 of, for example, TbFeCo is next formed; the dielectric film 42 of, for example, SiN is subsequently formed; and the reflective film 44 is finally formed.

When the optical disc 12 in which such RAM section 48 and ROM section 50 are formed in layers is irradiated with the laser light 52 from the transparent substrate 36 side, recording or reproduction using variations in the reflectance caused by phase pits of the ROM section 50 and the magneto-optical recording film 40 formed in the RAM section 48 can be performed at the same time.

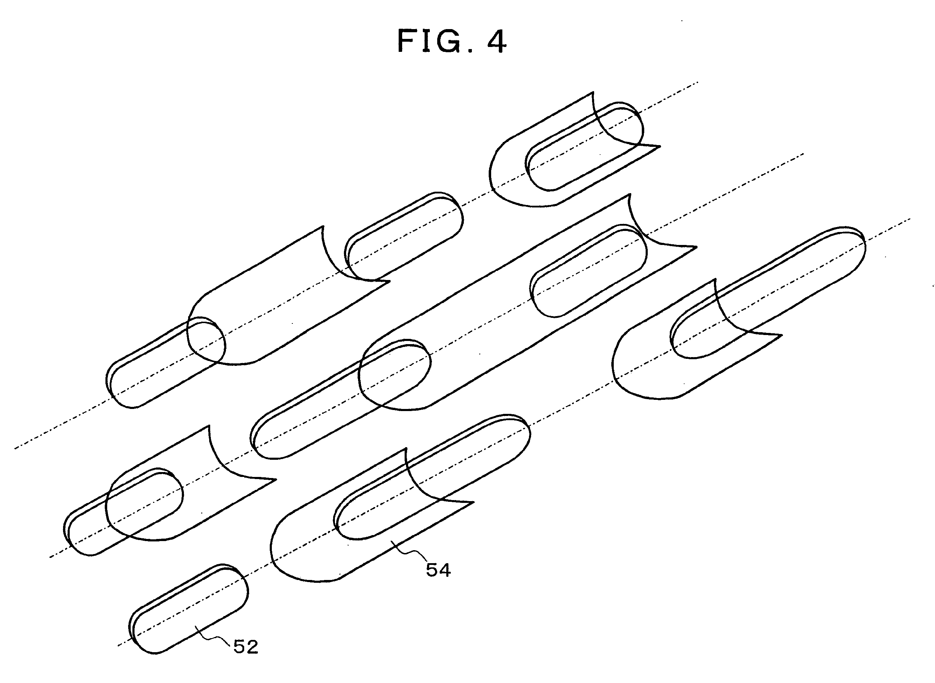

FIG. 4 is an explanatory drawing of a state of multiplex recording of ROM signals and RAM signals in the optical disc 12 of the present invention; wherein the phase pits 45 of FIG. 3B are shown in a state viewed from the lower side. In FIG. 4, irregularities forming the phase pits are physically recorded in the circumferential direction of the optical disc so as to produce ROM signals 52. As shown in FIG. 3C, the magneto-optical recording film 40 is formed below such phase pits of the ROM signals 52; therefore, RAM signals 54, for example, as magnetic marks are recorded therein. Herein, when the data of the ROM signal 52 is to be utilized for detecting timing upon recording of the RAM signal 54, the mark length of the RAM signal 54 can be set to n-times that of the ROM signal (wherein, n is an arbitrary integer of 1, 2, 3, ...).

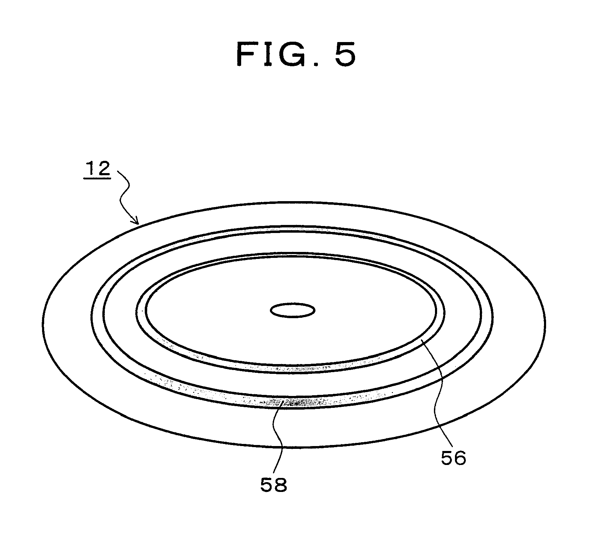

FIG. 5 is an explanatory drawing of recording regions in the optical disc 12 of the present invention. In this example, a recording region 56 of an N-th music piece and a recording region 58 of an N+k-th music piece on the optical disc 12 are shown, and, in each of the recording regions 56 and 58, the RAM section is divided into a plurality of information recording areas with respect to the ROM section.

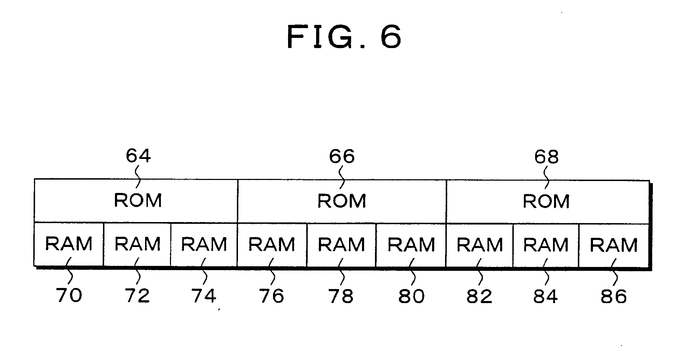

FIG. 6 is an explanatory diagram of a recording structure, i.e., a recording format of a case in which a RAM section is divided into three record information areas which can be synchronously reproduced with respect to a ROM section in the optical disc of the present invention. FIG. 6 focuses on three ROM sections 64, 66, and 68. The ROM section 64 is divided into record information areas serving as three RAM sections 70, 72, and 74; the ROM section 66 is also divided into three record information areas serving as RAM sections 76, 78, and 80; and the ROM section 68 is also divided into three record information areas serving as RAM sections 82, 84, and 86. Therefore, for example, in the example of the ROM section 64, when the information of the ROM section 64 is to be reproduced, in synchronization with this, recording of information or reproduction of information with respect to the three RAM sections 70, 72, and 74 can be synchronously performed.

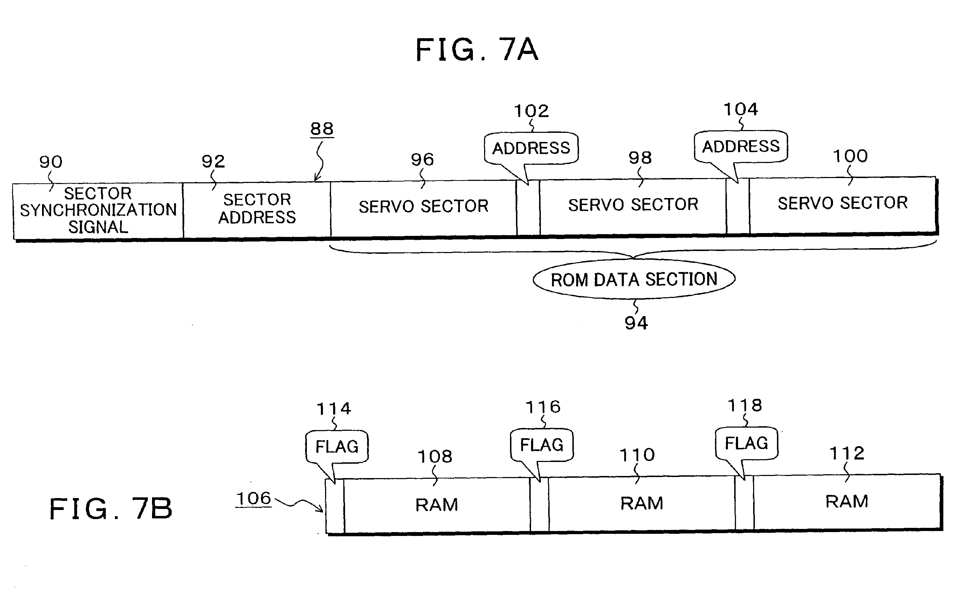

FIGs. 7A and 7B are explanatory diagrams of a specific medium format based on FIG. 6 in the optical disc 12 of the present invention. FIG. 7A shows a ROM section 88 which is composed of a sector synchronization signal 90 for identifying the head of the sector, a sector address 92 representing the address of each sector, and a ROM data section 94. Furthermore, in the ROM data section 94, addresses 102 and 104 representing dividing positions in the sector are formed so as to divide the sector into servo sectors 96, 98, and 100. Meanwhile, regarding a RAM section 106 of FIG. 7B shown is an example in which it is divided into three RAM sectors which can be synchronously recorded and reproduced with respect to one ROM sector in the ROM section 88 of FIG. 7A. Therefore, corresponding to the sector address 92 and addresses 102 and 104 of the ROM section 88, flags 114, 116, and 118 are provided at the heads of divided RAM sectors 108, 110, and 112 of the RAM section 106, so as to represent whether recording has been already performed or not on the divided RAM sectors. Music information having the same time length is recorded in the ROM data section 94 of such ROM section 88 and each of the divided RAM sectors 108, 110, and 112 of the RAM section 106. Therefore, in the ROM data section 94, music information is fixedly recorded in advance by use of phase pits without performing compression. On the other hand, in the divided RAM sectors 108, 110, and 112, music information having the same time length is compressed so as to have one-third of the time length, and recording is performed such that the total time of the three pieces of compressed music data equals the time of the ROM data section 94.

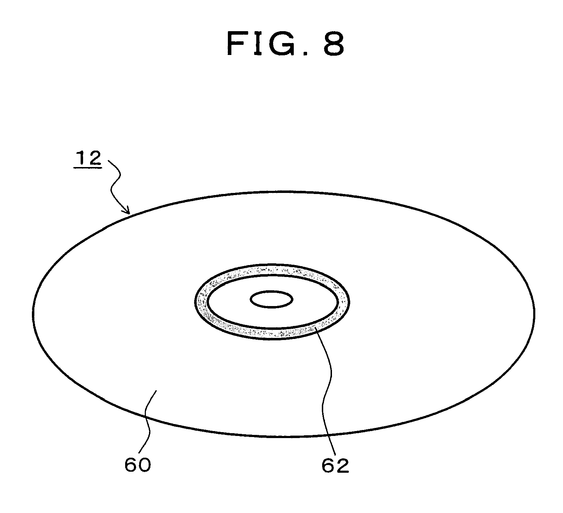

FIG. 8 is an explanatory drawing of a TOC region for recording mixing information in the optical disc 12 of the present invention. In the optical disc 12 of this embodiment, with respect to a data region 60 having the RAM section 48 and the ROM section 50 having the structure such as that shown in FIG. 3C, for example, a TOC region 62 having a structure including merely RAM sections is provided in the inner peripheral side thereof. In the TOC region 62 recorded is mixing information such as volume ratios, tones, waveform adjustment information of the music information recorded in the data region 60. In this mixing information, the mixing information of the music information recorded for each of the divided RAM sections is independently recorded since the RAM sections are divided into a plurality of sections with respect to one ROM section.

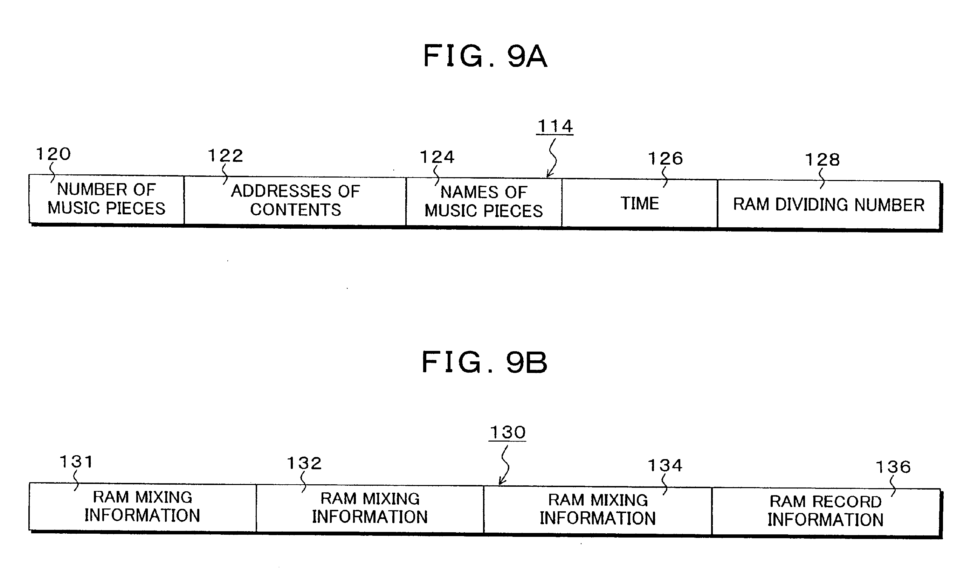

FIGs. 9A and 9B are explanatory diagrams of a medium format in the TOC region of FIG. 8. The TOC region of FIGs. 9A and FIG. 9B is corresponding to the data region of FIG. 8. In FIGs. 9A and 9B, the TOC region is composed of a ROM-TOC section 114 of FIG. 9A and a RAM-TOC section 130 of FIG. 9B. In the ROM-TOC section 114, the number 120 of music pieces, addresses 122 of contents, names 124 of music pieces, time 126, and a RAM dividing number 128 are recorded. The ROM-TOC section 114 is formed as phase pits in the TOC region since this section is fixed information. The RAM-TOC section 130 of FIG. 9B is divided into divided RAM sectors so as to provide RAM mixing information 131, 132, and 134 in which mixing information such as volume ratios, tones, waveform adjustment information is recorded. In addition, RAM record information 136 is provided so as to record the state of recorded divided RAM sectors and unrecorded divided RAM sectors.

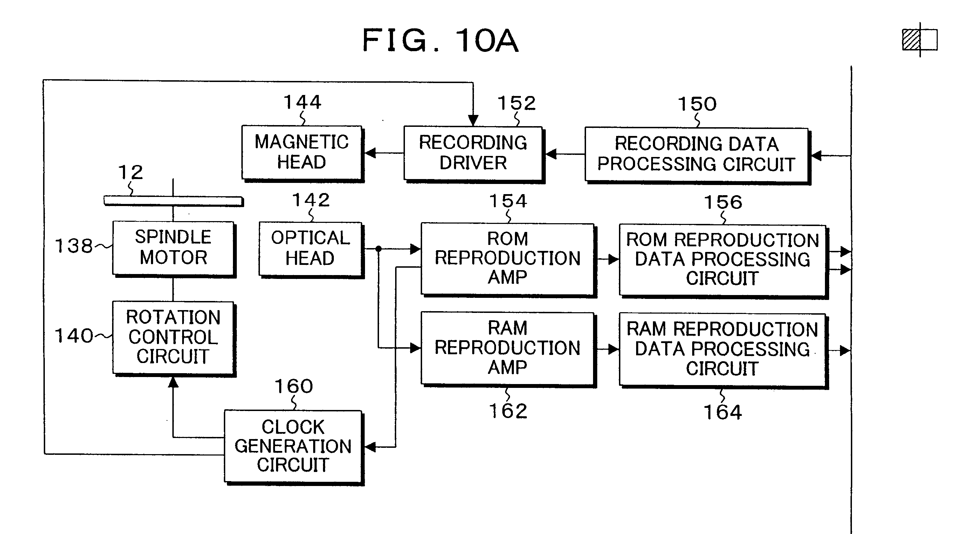

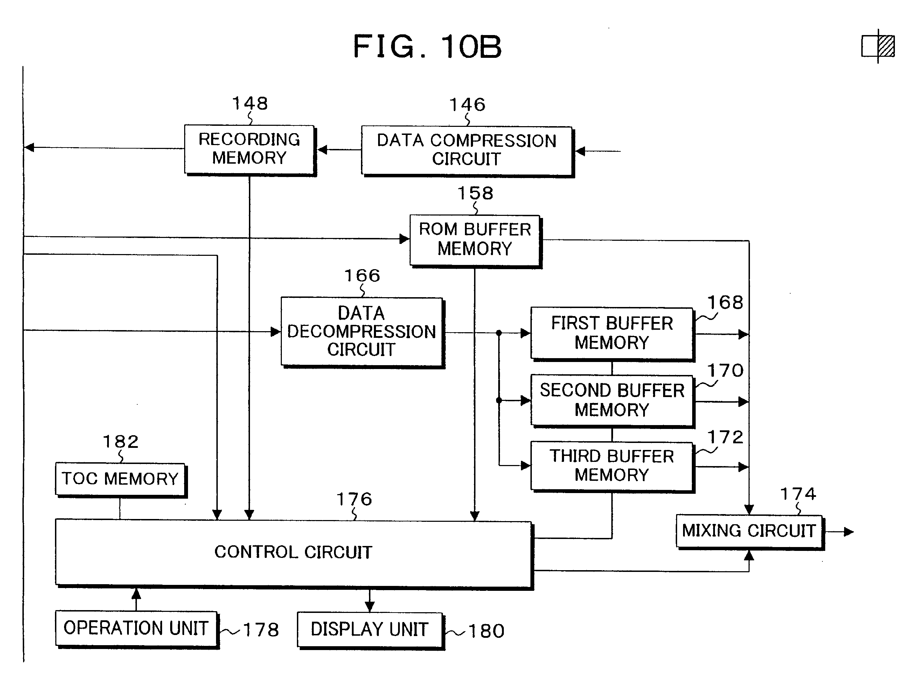

FIGs. 10A and 10B are block diagrams showing an embodiment of a recording/reproduction device according to the present invention.

In FIGs. 10A and 10B, the optical disc 12 inserted from outside by an unillustrated loading and unloading mechanism is attached to a spindle motor 138, and rotated at a constant speed. The spindle motor 138 is controlled by a rotation control circuit 140, wherein this rotation control is based on a clock frequency from a clock generation circuit 160, and, for example, CLV control (Constant Linear Velocity control) is performed. In this embodiment, an optical head 142 and a magnetic head 144 are provided as recording/reproduction heads for the optical disc 12. In the RAM sections, magnetic marks are recorded by the magnetic head 144 in a state in which DC continuous light of laser light from the optical head 142 is irradiated. Also, in synchronous reproduction of the ROM section and the RAM section of the optical disc 12, reproduction is performed by DC continuous light of laser light from the optical head 142. For example, a configuration described in the journal of the Institute of Image Information and Television Engineers, Vol. 46, No. 10, pp 1319 to 1324 (1992) can be used as the head configuration composed of such optical head 142 and magnetic head 144. By virtue of such head configuration, the RAM signals formed by the phase pits of the optical disc 12 and the magnetic marks formed on the magneto-optical recording film can be separately read out at the same time. A recording unit for recording information on the optical disc 12 is composed of a data compression circuit 146, a recording memory 148, a recording data processing circuit 150, and a recording driver 152. Meanwhile, a reproducing unit for synchronously reproducing the information of ROM sections and RAM sections of the optical disc 12 is composed of a ROM reproduction amplifier 154, a ROM reproduction data processing circuit 156, a ROM buffer memory 158, a RAM reproduction amplifier 162, a RAM reproduction data processing circuit 164, a data decompression circuit 166, a first buffer memory 168, a second buffer memory 170, a third buffer memory 172, and a mixing circuit 174. Furthermore, a control circuit 176 such as an MPU employing firmware is provided for controlling the recording unit and the reproducing unit, an operation unit 178 and a display unit 180 are provided for the control circuit 176, and a TOC memory 182 is connected thereto.

An operation of synchronous reproduction of a ROM section and RAM sections of the optical disc 12 in the recording/reproduction device of FIGS. 10A and 10B will next be described. When the user selects a music piece by use of the operation unit 178, the optical head 142 moves to a position corresponding to the address of the selected music piece, and record information of the ROM section and the RAM sections is separately read out. Read signals of the ROM section and the RAM sections which have been separately read out by the optical head 142 are amplified, subjected to waveform shaping, and then binarized in the ROM reproduction amplifier 154 and the RAM reproduction amplifier 162, respectively, and input to the ROM reproduction data processing circuit 156 and the RAM reproduction data processing circuit 164, respectively. The ROM reproduction data processing circuit 156 and the RAM reproduction data processing circuit 164 perform error-correcting operations after demodulating the binarized reproduction signals with respect to, for example, eight-to-fourteen modulation (EFM), and output the ROM data and the RAM data. Herein, the ROM reproduction data processing circuit 156 separates a sector address signal of the ROM data, and feeds that to the control circuit 176. In response to the sector address signal, the control circuit 176 recognizes the position of the optical head 142 over the optical disc 12, and performs tracking control for moving the optical head to a target position by use of an unillustrated optical head moving mechanism. Output of the ROM reproduction amplifier 154 is fed to the clock generation circuit 160, thereby feeding the clock frequency for rotation control at CLV to the rotation control circuit 140 and feeding the clock frequency for the recording timing to the recording driver circuit 152. The ROM data demodulated in the ROM reproduction data processing circuit 156 is fed to the ROM buffer memory 158. Herein, three buffer memories 168, 170, and 172 are provided corresponding to the three divided RAM sections. The RAM reproduction data processing circuit 164 performs a decompression process in the data decompression circuit 166 for restoring the RAM compressed data which has been demodulated from the three RAM sections, and then, feeds the data respectively to the first, second, and third buffer memories 168, 170, and 172 which are provided to correspond to the RAM sections. The ROM data stored in the ROM buffer memory 158 and the RAM data stored in the first, second, and third buffer memories 168, 170, and 172 are synthesized in the mixing circuit 174 in accordance with instructions of the control circuit 176 according to the mixing conditions recorded in the TOC memory 182, and output to outside, thereby outputting reproduced music from output devices such as speakers or headphones.

A recording operation on a RAM section synchronized with reproduction of a ROM section of the optical disc 12 in the recording/reproduction device of the present invention of FIGs. 10A and 10B will next be described. This is, for example, a case in which the user plays the guitar 16 while reproducing music information recorded in the ROM section of the optical disc 12 as shown in the multiplex recording/reproduction system of FIG. 1, and synchronously record the performance in the RAM section. In such recording on a RAM section synchronized with a ROM section, recording/reproduction operations are performed at the same time after the optical head 142 and the magnetic head 144 are controlled to be positioned at the position of the selected music piece of the optical disc 12. In the reproducing operation, the ROM data of the ROM section of the selected music piece in the optical disc 12 is read out by the optical head 142, controlled to be amplified in the ROM reproduction amplifier 154, then, demodulated in the ROM reproduction data processing circuit 156, stored in the ROM buffer memory 158, and then reproduced by an external speaker or the like via the mixing circuit 174. At this time, mixing with demodulated data of the RAM section is not performed in the control circuit 176 since it is recording. The user plays the guitar while listening to the recorded music through such reproduction of the ROM section, signals input through performance of the guitar undergo AD conversion, then, are compressed by the data compression circuit 146, and fed to the recording memory 148. Herein, address information detected through reproduction of the ROM section of the optical disc 12 is provided from the ROM reproduction data processing circuit 156 to the control circuit 176, and the control circuit 176 gives an instruction so as to control the timing for recording on the RAM section corresponding to the ROM section of the optical disc 12 which is being reproduced. At this recording timing, in the recording data processing circuit 150, data for error detection/correction is added to the compressed data which is read out from the recording memory 148, and, for example after eight-to-fourteen modulation (EFM), the data is recorded as magnetic marks in the RAM section of the optical disc 12 by the magnetic head 144 via the recording driver 152. Herein, when information is to be recorded in the RAM section of the optical disc 12 by the magnetic head 144, reproduction of the ROM section can be performed in the manner same as the normal manner together with the recording of magnetic marks on the RAM section by the magnetic head 144, since the laser light irradiated from the optical head 142 is DC continuous light.

A mixing operation upon synchronized reproduction which is performed in the recording/reproduction device of FIGs. 10A and 10B according to the present invention after a recording operation of, for example, a guitar performance on a RAM section of the optical disc 12 is finished will next be described. In the mixing operation, mixing conditions of music data which is recorded in a RAM section upon, for example, a guitar performance in synchronization with a ROM section of the optical disc 12 are adjusted in accordance with the user's preference, and recorded. In the mixing operation, the mixing ON/OFF button 24 of the recording/reproduction device 10 shown in FIG. 2 is operated so as to set an mixing-on state, the music piece to be subjected to mixing is selected by the music number selection unit 22, and a mixing track corresponding to the RAM section is selected by the mixing track selection button 34, thereby starting reproduction. In response to receipt of signals from the operation unit 178 of FIGs. 10A and 10B accompanying such mixing operation, the control circuit 176 synchronously reproduce the ROM section of the selected target music piece of the optical disc 12 and the RAM section which has been selected as a mixing track, such that a reproduction music piece obtained by synthesizing them is output from the speakers in accordance with the conditions for mixing set by the user. While listening to the reproduced music piece in the synchronously reproduced state according to such mixing, the user performs adjustment in accordance with one's preference by use of the volume ratio adjustment button 26, the RAM tone adjustment button 28, and the ROM tone adjustment button 30 of FIG. 2. The adjusted conditions for mixing are recorded in the TOC memory 182 through the control circuit 176. When the adjustment for mixing is finished and reproduction of the music piece is finished, the user presses the mixing determination button 32 of FIG. 2. When the mixing determination button 32 is pressed, the mixing conditions recorded in the TOC memory 182 are recorded in the TOC region 62 of the optical disc 12 as shown in FIG. 8. More specifically, since the ROM-TOC section 114 and the RAM-TOC section 130 like those shown in FIG. 9 are provided in the TOC region, the mixing conditions determined by the user is recorded in, for example, the RAM mixing information 131 of the RAM-TOC section 130. When the mixing conditions are recorded in the RAM-TOC section 130 of the optical disc in this manner, the disc is caused to have mixing conditions of the information of the ROM section and the plurality of RAM sections corresponding to that which are recorded in the optical disc 12 per se, and the music piece can be listened to on the same conditions even when the optical disc is reproduced in a different device.

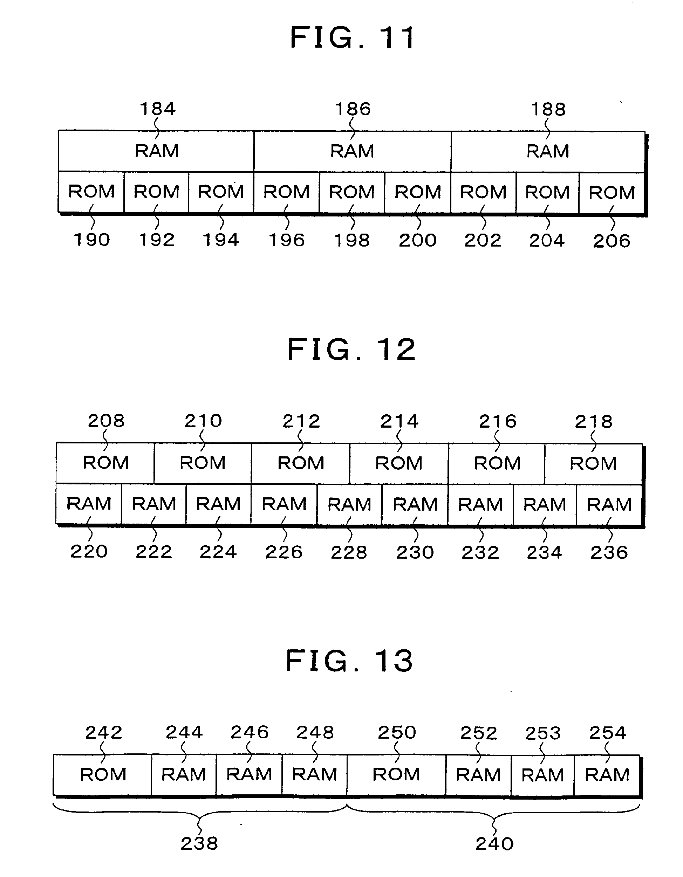

FIG. 11 is an explanatory diagram of a recording structure, i.e., a medium format showing another embodiment of the ROM sections and the RAM sections in the optical disc of the present invention. In the recording structure of FIG. 11, a ROM section corresponding to one RAM 184 is divided into information recording areas composed of three ROM sections 190, 192, and 194. This relation is exactly opposite to the relation of the ROM sections and the RAM sections shown in FIG. 6. Therefore, in an optical disc having the format configuration of FIG. 11, three different pieces of music information are recorded in advance, for example, respectively in the ROM sections 190, 192, and 194, which are three divided information recording areas corresponding to one RAM 184 , by forming phase pits. Therefore, the user selects the ROM data of at least any one of the three ROM sections 190, 192, and 194, and plays one instrument such as the guitar or the piano while reproducing the selected ROM data so as to synchronously recording it in the RAM section 184. Then, synchronous reproduction of both of them is performed so as to determine mixing conditions, and the determined mixing conditions are recorded in the TOC region of the optical disc. Herein, the time length of each of the three ROM sections 190, 192, and 194 upon reproduction has to be arranged to be equal to the time length of the RAM section 184. Therefore, with respect to the RAM section 184, the data of each of the three ROM sections 190, 192, and 194 is recorded by use of phase pits as compressed data which is compressed to one third thereof. Such relation between a RAM section and corresponding three ROM sections is also similar with respect to the RAM sections 186 and 188 subsequent to the RAM section 184, wherein each of the sections is divided into three ROM sections 196, 198, and 200, or ROM sections 202, 204, and 206.

The device configuration of a recording/reproduction device of an optical disc having the recording structure of FIG. 11 may be basically that of FIGs. 10A and 10B. However, since a ROM section is divided into three information recording areas with respect to one RAM section, first, second, and third ROM buffer memories are provided as the ROM buffer memory 158 like the illustrated first, second, and third buffer memories 168, 170, and 172 for RAM sections. In addition, a data decompression circuit is also provided in the ROM buffer memory 158 side. Meanwhile, in the RAM side, the data decompression circuit 166 is unnecessary, and the buffer memories may be one memory.

FIG. 12 is an explanatory diagram of another recording structure, i.e., a recording format of the optical disc of the present invention. This embodiment of FIG. 12 is characterized in that a RAM section is divided into three information recording areas corresponding to two ROM sections. For example, with respect to two ROM sections 208 and 210 in the front side, three information recording areas of RAM sections 220, 222, and 224 are correspondingly divided. In this case, the time length of each of the three RAM sections 220, 222, and 224 has to be arranged to be equal to the time length of each of the ROM sections 208 and 210. Therefore, the data of each of the RAM sections 220, 222, and 224 is compressed so as to have the time length which is two thirds of that of the data of the ROM sections 208 and 210, and synchronously recorded. This point is also the same in the rest RAM sections 212 to 218 and ROM sections 226 to 236. Reproduction of an optical disc having a recording structure like that of FIG. 12 can be realized by providing two ROM buffer memories 158 in FIGs. 10A and 10B. Certainly, the data compression circuit 146 and the data decompression circuit 166 may have any configuration as long as the time length of the recording data can be compressed to two thirds and recorded in the optical disc, and then, corresponding data decompression can be performed, thereby performing reproduction.

FIG. 13 is an explanatory diagram of a recording structure, i.e., a recording format of a case in which ROM sections and RAM sections are successively formed in the track direction (circumferential direction) of an optical disc. In this recording structure in which the ROM sections and the RAM sections are successive in the track direction, for example, one recording/reproduction area 238 is composed of a ROM section 242 and three RAM sections 244, 246, and 248 following that. Such an optical disc in which ROM sections and RAM sections are successively formed in the track direction is not limited to the optical disc shown in FIG. 3 in which the RAM section 48 and the ROM section 50 are formed in layers, and a phase-change-type optical disc can be also employed.

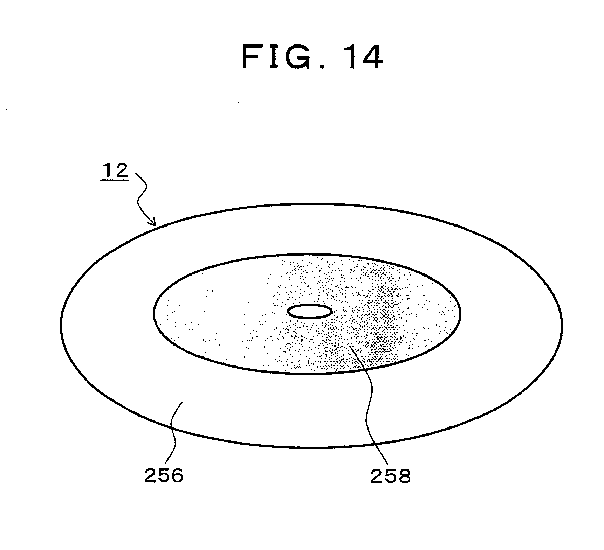

FIG. 14 is another embodiment of the optical disc according to the present invention; and the optical disc 12 is characterized in that the recording region of the optical disc 12 is divided into the inner periphery and the outer periphery, wherein, for example, the outer-peripheral recording region is a RAM section region 256 having magneto-optical marks, and the inner-peripheral recording region is a ROM section region 258 in which phase pits are formed.

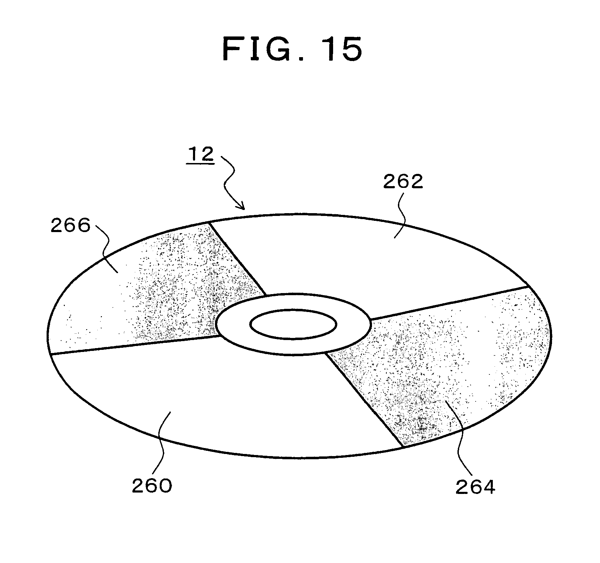

FIG. 15 is another embodiment in which the optical disc 12 is similarly divided into ROM regions and RAM regions, and the optical disc 12 is divided with respect to the circumferential direction in this embodiment. More specifically, the circumferential direction of the optical disc 12 is divided into four so as to separately provide a RAM region 260, a ROM region 264, a RAM region 262, and a ROM region 266. In such a recording structure in which the recording surface of the optical disc is divided into the ROM region(s) and the RAM region(s), in the case of FIG. 14 in which the surface is divided into the RAM region 256 and the ROM region 258 with respect to the radial direction, a corresponding sector table of the outer-peripheral RAM region 256 and the inner-peripheral ROM region 258 is prepared in advance by using table information and the like, ROM data and RAM data is stored in buffer memories after it is read out from the regions, such that synchronous reproduction can be performed after it is stored in the buffer memories. Also, in the case of FIG. 15 in which the recording surface is divided into RAM regions and ROM regions with respect to the circumferential direction, since the RAM regions and the ROM regions are alternately present in the same track, a corresponding sector table of the ROM data and RAM data corresponding thereto is prepared, such that synchronous reproduction and synchronous recording of the ROM data and RAM data according to the corresponding relation of the sector table can be performed.

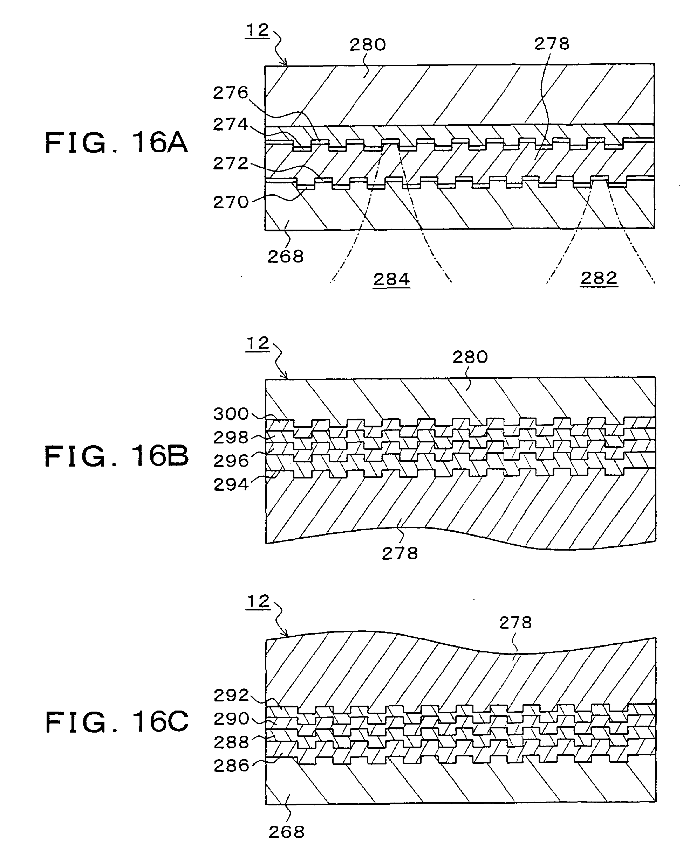

FIGs. 16A to 16C are another embodiment of the optical disc 12 of the present invention which is characterized in that a RAM section and a ROM section are provided in layers as well as the optical disc 12 of FIG. 3C, and, in addition, the RAM section and the ROM section are duplicated in the thickness direction of the medium.

FIG. 16A is a cross sectional view of the optical disc 12 having a duplicated recording structure in which a recording layer 272 is provided subsequent to phase pits 270 which are formed in a transparent substrate 268, thereby forming first ROM section and RAM section. Subsequently, phase pits 274 and a recording layer 276 are provided via a space layer 278, thereby forming second ROM section and RAM section, and a protective coat 280 is provided thereon.

FIG. 16B is a detailed structure of the second ROM section and RAM section positioned in the protective coat 280 side, and FIG. 16C is a detailed structure of the first ROM section and RAM section positioned in the transparent substrate 268 side. The first ROM section and RAM section of FIG. 16C will be described first. A dielectric film 286 of, for example, SiN is formed on the phase-pit-formed surface of the transparent substrate 268; a magneto-optical recording film 288 of, for example, TbFeCo is subsequently formed; a dielectric film 290 of, for example, SiN is subsequently formed; and a semi-transparent reflective film 292 is finally formed. The second ROM section and RAM section of FIG. 16B will next be described. Subsequent to the space layer 278 which has phase pits which have been formed in advance and is formed through UV-effect bonding such as stamping; a dielectric film 294 of, for example, SiN is formed; a magneto-optical film 296 of TbFeCo is subsequently formed; a dielectric film 298 of, for example, SiN is formed; and a reflective film 300 using an alloy of Al, silver, and gold is formed.

Herein, the reflectance of the reflective film of the first ROM section and RAM section of FIG. 16C is adjusted to, for example, a range of 30 to 70% in order to ensure a reflective film which is required for reading out the phase pits. By virtue of such adjustment of the reflectance, the light intensity of the incoming laser which enables read-out of the phase pits by use of the reflective film 300 can be obtained also with respect to the second ROM section and RAM section of FIG. 16B which is positioned behind the film, and the phase pits can be sufficiently read out when the reflective film 300 has a reflectance of, for example, 80% ormore. As a matter of course, required reflectance in the two phases of the ROM sections and RAM sections can be arbitrarily determined by adjusting the film thicknesses thereof. The recording capacity of the optical disc 12 having such duplicated structure like that of FIGs. 16A to 16C can be doubled compared with the optical disc 12 having the structure of FIG. 3C. Moreover, in the optical disc 12 having the duplicated structure of FIG. 16A, as shown in FIG. 16A, synchronous recording and synchronous reproduction of the ROM sections and the RAM sections of either one of the duplication can be performed by adjusting the focusing positions like a laser beam 282 or a laser beam 284 in accordance with the position of the recording section in the thickness direction.

It should be noted that, although the above described embodiment employs, as an example, the case in which a RAM section is divided into three information recording areas with respect to one ROM section, the dividing number may be an arbitrary dividing number in accordance with needs as long as the dividing number is two or more. This relation also applies the case in which a ROM section is divided into three information recording areas with respect to one RAM section.

The above described embodiments employ, as an example, recording and reproduction of music information; however, the embodiments can be applied to recording and reproduction of information other than music information such as image information in the exactly same manner. The present invention is not limited to the above described embodiments, includes arbitrary modifications that do not impair the object and advantages thereof, and is not limited by the numerical values shown in the above described embodiments.

## Claims

1. An optical disc in which a ROM section in which information is recorded by a phase pit utilizing light reflectance and a RAM section on/from which recording and reproduction can be performed are disposed in layers, and the information recorded in the ROM section and information recorded in the RAM section can be synchronously reproduced; wherein
the RAM section is divided into a plurality of information recording areas which can be synchronously reproduced with the ROM section.

2. An optical disc in which a ROM section in which information is recorded by a phase pit utilizing light reflectance and a RAM section on/from which recording and reproduction can be performed are disposed in layers, and the information recorded in the ROM section and information recorded in the RAM section can be synchronously reproduced; wherein
the ROM section is divided into a plurality of information recording areas which can be synchronously reproduced with the RAM section.

3. The optical disc according to claim 1, wherein the information recording areas have a structure composed of units of at least one ROM section having an information amount of a certain time length and at least two RAM sections having an information amount equal to the time length of the ROM section.

4. The optical disc according to claim 2, wherein the information recording areas have a structure composed of units of at least two ROM sections having an information amount of a certain time length and at least one RAM section having an information amount equal to the time length of the ROM section.

5. The optical disc according to claim 1 or 2, wherein the RAM section and the ROM section are overlapped with each other.

6. The optical disc according to claim 5, wherein the RAM section is a magneto-optical recording film.

7. The optical disc according to claim 1 or 2, wherein a region for recording mixing information used for synthesizing the information recorded in the ROM section and the RAM section is provided on a medium.

8. The optical disc according to claim 7, wherein the mixing information is recorded in a RAM section other than the information recording areas.

9. A disc-like optical disc in which a ROM section in which information is recorded by a phase pit utilizing reflectance and a RAM section on/from which recording and reproduction can be performed by light are disposed at different positions on a medium; wherein
the RAM section is divided into a plurality of information recording areas which can be synchronously reproduced with the ROM section.

10. The optical disc according to claim 9, wherein, in the information recording areas, the total of a certain time length of each of the divided RAM sections is approximately equal to a time length of the ROM section.

11. The optical disc according to claim 9, wherein mixing information of the divided RAM sections is recorded on the medium.

12. A disc-like multiplex optical disc in which a ROM section in which information is recorded by a phase pit utilizing reflectance and a RAM section on/from which recording and reproduction can be performed are disposed at different positions on a medium; wherein
the ROM section is divided into a plurality of information recording areas which can be synchronously reproduced with the RAM section.

13. The optical disc according to claim 12, wherein, in the information recording areas, the total of a certain time length of each of the divided ROM sections is approximately equal to a time length of the RAM section.

14. The optical disc accordint to claim 12, wherein mixing information of the divided ROM sections is recorded on the medium.

15. The optical disc according to claim 9 or 12, wherein the ROM section and the RAM section are repeatedly disposed in the circumferential direction.

16. The optical disc according to claim 9 or 12, wherein the RAM section is formed of a phase change recording film.

17. The optical disc according to claim 9 or 12, wherein the mixing information is recorded in a RAM section other than the information recording areas.

18. The optical disc of claim 1, 2, 9, or 12, wherein music information is recorded in the ROM section, and other music information synchronized with the music information of the ROM section is recorded in the RAM section.

19. A recording/reproduction device for recording and reproducing information of an optical disc in which a ROM section in which an information piece is recorded in advance by a phase pit utilizing light reflectance and a RAM section on/from which recording and reproduction can be performed are disposed in layers, and the RAM section is divided into a plurality of information recording areas which can be synchronously reproduced with the ROM section; the recording/reproduction device comprising:
a recording unit for recording RAM information pieces in units of the information recording areas of the RAM section; and
a reproducing unit for reading out the ROM information piece of the ROM section and the RAM information pieces of the RAM section, and synchronously synthesizing and reproducing the ROM information piece and one or more of the RAM information pieces, which have been read out.

20. A recording/reproduction device for recording and reproducing information of an optical disc in which a ROM section in which information is recorded by a phase pit utilizing light reflectance and a RAM section on/from which recording and reproduction can be performed are disposed in layers, and the ROM section is divided into a plurality of information recording areas which can be synchronously reproduced with the RAM section such that ROM information pieces are recorded in advance; the recording/reproduction device comprising:
a recording unit for recording a RAM information piece in the RAM section; and
a reproducing unit for reading out the ROM information pieces of the ROM section and the RAM information piece of the RAM section, and synchronously synthesizing and reproducing the RAM information piece and one or more of the ROM information pieces, which have been read out.

21. A recording/reproduction device of an optical disc in which a ROM section in which an information piece is recorded in advance by a phase pit utilizing reflectance and a RAM section on/from which recording and reproduction can be performed are disposed at different positions on a medium, and the RAM section is divided into a plurality of information recording areas which can be synchronously reproduced with the ROM section; the recording/reproduction device comprising:
an information detecting unit for detecting the ROM information piece of the ROM section and RAM information pieces of the RAM section; and
a reproducing unit for synchronously synthesizing and reproducing the ROM information piece and one or more of the RAM information pieces which have been detected by the information detecting unit.

22. A recording/reproduction device of an optical disc in which a ROM section in which information pieces are recorded in advance by phase pits utilizing reflectance and a RAM section on/from which recording and reproduction can be performed are disposed at different positions on a medium, and the ROM section is divided into a plurality of information recording areas which can be synchronously reproduced with the RAM section; the recording/reproduction device comprising:
a recording unit for recording a RAM information piece in the RAM section; and
a reproducing unit for reading out the ROM information pieces of the ROM section and the RAM information piece of the RAM section, and synchronously synthesizing and reproducing the RAM information piece and one or more of the ROM information pieces, which have been read out.
